# EUROPÄISCHE PATENTSCHRIFT

(11) **EP 2 187 076 B1**
(45) Veröffentlichungstag und Bekanntmachung des Hinweises auf die Patenterteilung: **18.07.2012**
(21) Anmeldenummer: 08019852.6
(22) Anmeldetag: 13.11.2008
(51) Int. Cl.: F16D 1/09

(54) **Hohlwellenkupplung**
Hollow shaft coupling
Couplage d'arbre creux

(43) Veröffentlichungstag der Anmeldung: 19.05.2010
(73) Patentinhaber: Ringfeder Power-Transmission GmbH, 64823 Gross-Umstadt (DE)
(72) Erfinder: Schüßler, Gerd, 63868 Großwallstadt (DE)
(74) Vertreter: Köster, Hajo

(56) Entgegenhaltungen:
- WO-A-2005/036004
- DE-U1- 9 003 205
- GB-A- 1 016 675
- GB-A- 1 402 250

## Beschreibung

Die Erfindung betrifft eine Hohlwellenkupplung zum Verbinden einer Welle mit einer Hohlwelle, wobei diese Hohlwellenkupplung vollständig in der Hohlwelle angeordnet sein kann und eine Verspannung sowohl nach axial innen als auch nach axial außen bewirken kann.

Derartige Hohlwellenkupplungen dienen unter anderem zum Anbinden eines Motors an eine Lineareinheit. Eine derartige Hohlwellenkupplung ist im Betriebszustand vollständig in der Hohlwelle angeordnet und befindet sich somit quasi im Inneren der Hohlwelle. Von axial außen ragt eine Welle, beispielsweise eine Vollwelle hinein, die mit Hilfe der Hohlwellenkupplung mit der Hohlwelle durch Verspannen verbunden wird. Um diese Verspannung sicher zu stellen, dient üblicherweise ein Spannsatz, der sowohl nach radial innen als auch nach radial außen eine Verspannung bewirkt. Zudem ist dieser bekannte Spannsatz auf der axialen Höhe der die Hohlwelle lagernden Kugellager angeordnet.

Da die Mittelachse der Welle und der Hohlwelle häufig zueinander versetzt sind und kein Ausgleich möglich ist, führt dies zu verschiedenen Problemen. Dazu zählen beispielsweise eine axiale Lagerbelastung wegen Wärmeausdehnung und Montagefehlern sowie eine radiale Lagerbelastung wegen des Achsversatzes. Da die nach radial außen wirkenden Kräfte im Bereich der Kugellager auftreten, kann es zudem zu einer Kugellagerverspannung und einem Aufwölben der Hohlwelle kommen.

Aufgabe der vorliegenden Erfindung ist es, eine Hohlwellenkupplung bereitzustellen, mit der eine Welle problemfreier mit einer Hohlwelle verspannt und somit verbunden werden kann.

Gelöst wird diese Aufgabe durch eine Hohlwellenkupplung, bei der zwei separate Spannsätze vorhanden sind. Ein erster Spannsatz verspannt die Hohlwellenkupplung gegen die Welle nach axial innen, während ein vom ersten Spannsatz separater, zweiter Spannsatz die Hohlwellenkupplung nach axial außen gegen die Hohlwelle verspannt. Die beiden Spannsätze sind dabei axial voneinander beabstandet. Da die zu verspannende Welle von außen in die Hohlwelle hineinragt, befindet sich der erste Spannsatz auf der wellenzugeneigten Seite, während der zweite Spannsatz weiter innen in der Hohlwelle angeordnet ist. Im verspannten Zustand besteht eine kraftschlüssige Verbindung zwischen Hohlwelle und Welle.

Die beiden Spannsätze sind miteinander über ein zwischen diesen beiden Spannsätzen angeordnete spielfreie und drehstabile Kupplung verbunden. Eine Kupplung der hier in Rede stehenden Art weißt üblicherweise zwei Naben und ein dazwischen liegendes, die Naben miteinander verbindendes Kupplungselement auf. Eine der Naben wird üblicherweise mit einem Antrieb und die andere mit einem Abtrieb verbunden.

Bei der hier in Rede stehenden Kupplung können die beiden Spannsätze quasi die Naben darstellen, welche den Antrieb, beispielsweise die Motorwelle, mit dem Abtrieb, beispielsweise die Hohlwelle, verbindet.

Mit der erfindungsgemäßen Hohlwellenkupplung können je nach Ausgestaltung und Ausführungsform verschiedene Vorteile erreicht werden.

Bedingt dadurch, dass die beiden Spannsätze axial voneinander beabstandet sind, wird das Kugellager der Hohlwelle nicht mehr verspannt. Auch ein Aufwölben der Hohlwelle kann minimiert werden. Zudem ist es möglich, einen Versatz der Mittelachsen von Welle und Hohlwelle zu kompensieren sowie Montagetoleranzen auszugleichen. Im Falle von Resonanzschwingungen können diese neutralisiert werden.

Auf diese und weitere Vorteile wird nachstehen noch näher unter Bezug auf die Zeichnungen eingegangen.

Die erfindungsgemäß zum Einsatz gebrachten Spannsätze besitzen ebenso wie der entsprechende Spannsatz bei der bekannten Hohlwellenkupplung eine zylindrische Außenmantelfläche. Die Innenmantelfläche der Hohlwelle ist ebenfalls zylindrisch. Die Spannsätze sind derart zu dimensionieren, dass sie vollständig in die Hohlwellen hinein geschoben werden können. Der Außendurchmesser der Spannsätze ist dabei etwas geringer, als der Innendurchmesser der Hohlwelle, damit - wie gesagt - die Hohlwellenkupplung in die Hohlwelle eingesetzt werden kann.

Nach einer bevorzugten Ausführungsform ist der Außendurchmesser des zweiten Spannsatzes größer als der Außendurchmesser des ersten Spannsatzes. Wählt man in diesem Fall den Außendurchmesser des zweiten Spannsatzes derart, dass er zwar noch in die Hohlwelle eingesetzt werden kann, jedoch möglichst passgenau, dann ist die Außenmantelfläche des ersten Spannsatzes von der Innenmantelfläche der Hohlwelle einen bestimmten Betrag beabstandet. Beim Betätigen des ersten Spannsatzes und somit beim Verspannen kann sich dieser Spannsatz noch nach radial außen ausdehnen oder aufwölben, ohne dass er an die Innenmantelfläche der Hohlwelle in Anlage kommt oder ohne dass, sofern eine Anlage erfolgt, zu große nach radial außen wirkende Kräfte auftreten. Auf diese Weise wird sichergestellt, dass eine Verspannung nach radial außen nur im oder fast nur im axialen Bereich des zweiten Spannsatzes erfolgt, der axial vom Kugellager der Hohlwelle, das üblicherweise im Bereich der axialen Enden der Hohlwelle angeordnet ist, entfernt ist.

Nach einer weiteren bevorzugten Ausführungsform ist die erfindungsgemäße eingesetzte Kupplung eine steckbare Kupplung. Die beiden Kupplungsnaben sind an den zueinander zeigenden axialen Enden der Spannsätze ausgebildet. Dies kann beispielsweise dadurch erfolgen, dass diese Kupplungsnaben mit den Spannsätzen einstückig ausgebildet sind oder fest damit verbunden sind. Dies gilt im übrigen nicht nur für eine steckbare Kupplung sondern auch für die anderen, weiter unten noch näher beschriebenen Kupplungen.

Die Verbindung der beiden Kupplungsnaben erfolgt dann durch mindestens ein Steckteil, das sich von einer Kupplungsnabe zur anderen erstreckt und ein Verdrehen der beiden Kupplungsnaben bzw. der beiden Spannsätze zueinander verhindert. Bei diesem Steckteil kann es sich beispielsweise um einen Stift handeln, beispielsweise einen Zylinderstift, dessen eines Ende in eine Ausnehmung in einer Kupplungsnabe und dessen anderes Ende in einer Ausnehmung in der anderen Kupplungsnabe eingesetzt ist.

Die konstruktive Ausgestaltung einer derartigen steckbaren Kupplung ist beispielsweise in der DE 198 19 239 A1 beschrieben. Die hier erwähnten und auch dort beschriebenen Zylinderstifte stellen somit das Kupplungselement dar, welche die beiden Naben (im vorliegenden Fall Spannsätze) miteinander verkoppelt.

Nach einer weiterhin bevorzugten Ausführung stellt die hier erfindungsgemäß eingesetzte Kupplung eine Balgkupplung und insbesondere eine Metallbalgkupplung dar. Das die beiden Naben miteinander verkoppelnde Kupplungselement ist in diesem Fall ein insbesondere federelastischer Balg. Ein derartiger Kupplungstyp ist beispielsweise beschrieben in der EP 1 923 588 A1.

Als Kupplungstyp für die erfindungsgemäße Hohlwellenkupplung kann auch eine Elastomerkupplung Anwendung finden. Bei einem derartigen Kupplungstyp erstrecken sich von den beiden Naben mehrere Fortsätze bzw. Zapfen in axiale Richtung sowie in Richtung auf die gegenüberliegende Kupplungsnabe. Zudem wird zwischen den beiden Kupplungsnaben ein Elastormerzahnkranz angeordnet, der nach radial außen vorragende Vorsprünge aufweist, die im zusammengebauten Zustand dieser Kupplung zwischen zwei Zapfen/Fortsätzen zu liegen kommen. In diesem Fall wird das Kupplungselement aus diesen Zapfen/Fortsätzen und dem Elastomerzahnkranz mit seinen Vorsprüngen gebildet.

Bei einer weiteren bevorzugten Ausführungsform besteht das Kupplungselement aus einer Federscheibenanordnung. Die entsprechende Kupplung stellt somit eine so genannte Federscheibenkupplung dar. Ein derartiger Kupplungstyp ist beispielsweise beschrieben in der EP 0 318 669 A1.

Um das Verspannen eines Spannsatzes zu bewirken, ist üblicherweise ein Betätigungsmittel zum Einsatz zu bringen. Um nun bei der erfindungsgemäßen Hohlwellenkupplung den ersten Spannsatz betätigen und damit die Welle mit dem Spannsatz verspannen zu können, muss das dazugehörige Betätigungsmittel von der anderen axialen Seite der Hohlwelle und somit von derjenigen Seite, welche der eingesetzten Welle gegenüberliegt, betätigt werden können. Vorzugsweise weist daher das Kupplungselement eine Öffnung auf, durch die hindurch das Betätigungsmittel von der wellenabgewandten Seite der Hohlwelle her zugänglich ist. Bei diesem Betätigungsmittel handelt es sich vorzugsweise um eine zentrische Gewindeschraube, deren Kopf zur wellenabgewandten Seite der Hohlwelle zeigt. Durch Drehen dieser Gewindeschraube wird der erste Spannsatz betätigt. Dies wird weiter unten in den Beispielen näher erläutert. Bei den oben beschriebenen Kupplungstypen weisen die dafür eingesetzten Kupplungselemente alle eine derartige Öffnung, beispielsweise eine zentrale Bohrung bzw. eine zentrale Öffnung auf, durch die hindurch sich ein Schraubendreher oder ein Inbusschlüssel erstrecken kann, um das Betätigungsmittel wirksam werden zu lassen. Vorzugsweise handelt es sich daher bei der Gewindeschraube auch um eine Inbusschraube.

Die Gewindeschraube greift vorzugsweise in eine Gewindebohrung eines konusförmigen Spannkegels ein, der mit einer konisch ausgebildeten Spannbuchse zur Bildung des ersten Spannsatzes zusammenwirkt.

Die erfindungsfunktionalen Teile der erfindungsgemäßen Hohlwellenkupplung und somit auch der Spannsätze und des Kupplungselementes sind aus geeigneten Materialien gefertigt, welche den Belastungen standhalten können. Bei diesen Materialien handelt es sich beispielsweise um Stahl bzw. ein Metall beispielsweise Aluminium. Derartige Materialien sind auf dem Kupplungsgebiet gut bekannt.

Die Erfindung wird im Folgenden anhand einiger exemplarischer bevorzugter Ausführungsformen unter Bezug auf die begleitenden Zeichnungen näher erläutert. Von den Figuren zeigen:
- Fig. 1: eine Längsschnittansicht durch eine erfindungsgemäße Hohlwellenkupplung, die in eine Hohlwelle eingesetzt ist und eine Welle mit der Hohlwelle verspannt,
- Fig. 2: eine der Fig. 1 analoge Längsschnittansicht durch eine Hohlwellenkupplung mit einer Federscheibenkupplung,
- Fig. 3: eine Ansicht auf die rechte Stirnfläche der in der Fig. 2 gezeigten Hohlwellenkupplung, wobei dargestellt, wie der Schnitt A-A in der Fig. 2 verläuft,
- Fig. 4: eine perspektivische Ansicht der in der Fig. 2 gezeigten Hohlwellenkupplung,
- Fig. 5: eine Längsschnittansicht einer weiteren Ausführungsform der erfindungsgemäßen Hohlwellenkupplung mit einer steckbaren Kupplung,
- Fig. 6: eine Aufsicht auf die rechte Stirnseite der in der Fig. 5 gezeigten Hohlwellenkupplung mit dem Verlauf des Schnittes A-A,
- Fig. 7: eine perspektivische Darstellung der in der Fig. 5 gezeigten Hohlwellenkupplung in Explosionsansicht,
- Fig. 8: eine Längsschnittansicht einer weiteren Ausführungsform der erfindungsgemäßen Hohlwellenkupplung mit einer Balgkupplung,
- Fig.9: eine Aufsicht auf die rechte Stirnfläche der in der Fig. 8 gezeigten Hohlwellenkupplung mit dem Verlauf des Schnittes A-A,
- Fig. 10: eine perspektivische Ansicht der in der Fig. 8 gezeigten Hohlwellenkupplung,
- Fig. 11: eine Längsschnittansicht einer weiteren Hohlwellenkupplung mit einer Federscheibenkupplung,
- Fig. 12: eine Aufsicht auf die rechte Stirnfläche der in der Fig. 11 gezeigten Hohlwellenkupplung und dem Verlauf des Schnittes A-A und
- Fig. 13: eine perspektivische Ansicht der in der Fig. 11 gezeigten Hohlwellenkupplung in Explosionsdarstellung.

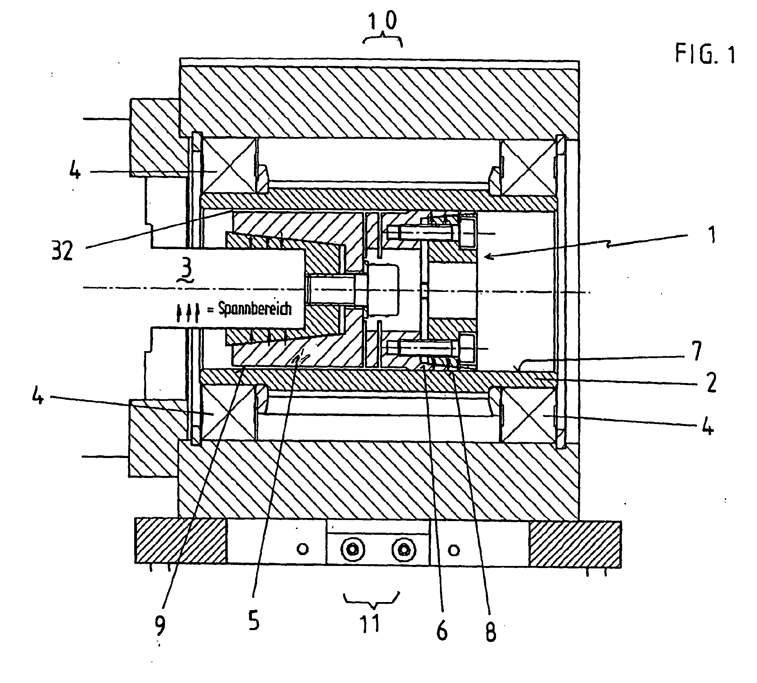

Die in der Fig. 1 in Längsschnittansicht gezeigte erfindungsgemäße Hohlwellenkupplung 1 ist in eine Hohlwelle 2 eingesetzt und verspannt diese Hohlwelle 2 mit einer Welle 3, bei der es sich um eine Motor-Vollwelle handeln kann.

Die Hohlwelle 2 dient als Zahnriemenantrieb einer Lineareinheit und ist an ihren axialen Enden durch Kugellager 4 drehbar gelagert.

Die Hohlwellenkupplung 1 besitzt zwei axial beabstandete Spannsätze, nämlich einen ersten Spannsatz 5 und einen zweiten Spannsatz 6.

Der erste Spannsatz 5 verspannt die Welle 3 mit der Hohlwelle 1 bzw. mit diesem Spannsatz 5. In der Fig. 1 ist der Spannbereich mit Pfeilen angegeben, welche auch die radiale Richtung der ausgeübten Spannkraft angibt. Es findet somit eine Verspannung nach radial innen statt.

Der zweite Spannsatz 6 verspannt die Hohlwellenkupplung 1 mit der Hohlwelle 2. Auch in diesem Fall ist der Spannbereich mit Pfeilen dargestellt. Dieser Spannsatz übt somit eine nach radial außen wirkende Spannkraft aus und drückt die Außenmantelfläche 8 dieses zweiten Spannsatzes 6 gegen die Innenmantelfläche 7 der Hohlwelle 2.

Der Außendurchmesser des zweiten Spannsatzes 6 ist größer als der Außendurchmesser des ersten Spannsatzes 5 und liegt mit seiner Außenmantelfläche 8 an der Innenmantelfläche 7 an oder ist dicht beabstandet.

Der Außendurchmesser der Hohlwellenkupplung 1 im Bereich des ersten Spannsatzes 5 ist geringer, so dass die Außenmantelfläche 9 des ersten Spannsatzes 5 von der Innenmantelfläche 7 beabstandet ist.

Zwischen den beiden Spannsätzen 5 und 6 befindet sich ein Kupplungselement 10, welches die beiden Spannsätze 5, 6 spielfrei und drehstabil miteinander verbindet. Bei der in der Fig. 1 gezeigten Ausführungsform handelst es sich dabei um eine Federscheibeneinheit (die nachstehend noch näher erläutert ist).

Die Spannsätze 5 und 6, welche quasi die Kupplungsnaben der Kupplung 11 bilden, sind - wie gesagt - axial beabstandet. Der Spannbereich des ersten Spannsatzes 5 liegt zwar im axialen Bereich des wellenzugewandten Kugellagers 4, übt seine Spannwirkung jedoch nach innen aus, so dass in diesem Bereich keine Kugellagerverspannung auftreten kann.

Die durch den zweiten Spannsatz 6 ausgeübte, nach radial außen wirkende Spannkraft liegt in einem von den Kugellagern 4 beabstandeten Bereich dadurch wird das Aufwölben der Hohlwelle 2 minimiert.

Durch das Dazwischenschalten eines Kupplungselementes 10 kann der Versatz der Mittelachsen der Welle 3 und der Hohlwelle 2 kompensiert werden. Außerdem können dadurch Montagetoleranzen ausgeglichen werden. Eine derartige Kupplung 11 mit dem Kupplungselement 10 ist auch in der Lage, Resonanzschwingungen zu neutralisieren.

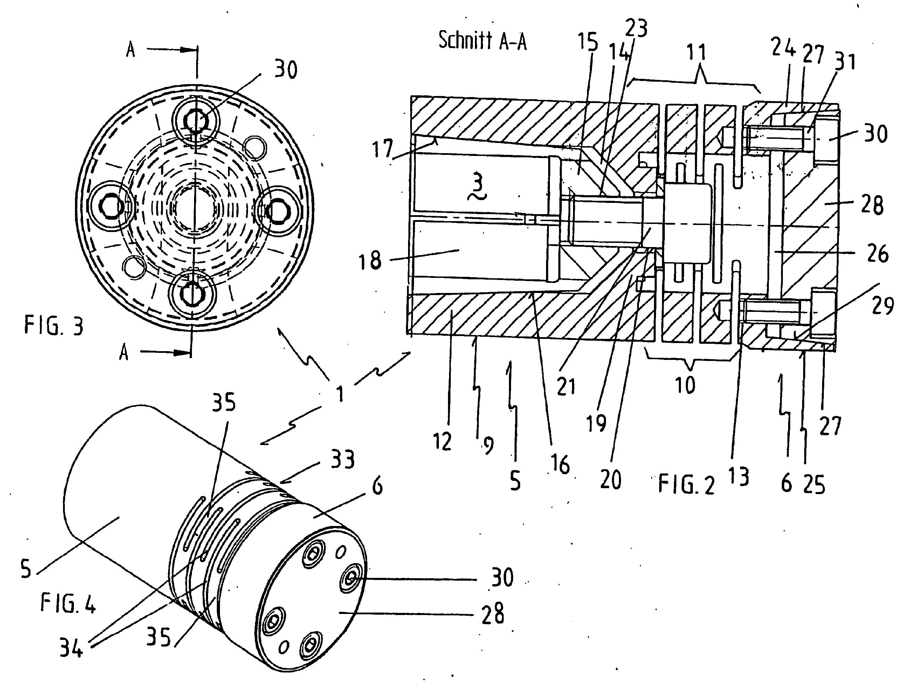

Die Fig. 1 dient primär zum Erläutern des Wirkungsprinzips der erfindungsgemäßen Hohlwellenkupplung 1. Die in der Fig. 1 gezeigte Federscheibenkupplung bzw. das Kupplungselement in Form einer Federscheibeneinrichtung bzw. Federscheibenanordnung ist in den Figuren 2 bis 4 näher erläutert, wobei das in der Fig. 2 gezeigte Kupplungselement 10 mehr Federscheiben aufweist als das in der Fig. 1 gezeigte Kupplungselement 10.

In der Fig. 2 ist eine erfindungsgemäße Hohlwellenkupplung 1 in Alleinstellung und somit im nicht eingebauten Zustand gezeigt, um die Hohlwellenkupplung 1 besser erläutern zu können.

Die Hohlwellenkupplung 1 besitzt einen ersten Spannsatz 5 und einen zweiten Spannsatz 6. Der erste Spannsatz 5 besitzt eine Spannbuchse 12 mit einer zylindrischen Außenmantelfläche 9 und einem zentrischen, in etwa zylindrischen Hohlraum 14. Dieser Hohlraum 14 ist jedoch nicht streng zylindrisch sondern verjüngt sich konusartig von axial außen nach axial innen.

In diesem Hohlraum 14 ist ein Innenkonus 15 eingesetzt, der eine konische Außenmantelfläche 16 besitzt, die komplementär konisch zur Innenmantelfläche 17 der Spannbuchse 12 ausgestaltet ist.

Der Innenkonus 15 besitzt einen zentrischen zylindrischen Innenhohlraum 18, in welche die Welle 3 hineinragt. Axial innen ist der erste Spannsatz 5 mit einer nach parallel innen vorragenden Ringschulter 19 ausgestatten, welche eine Durchlassöffnung 20 umgrenzt, durch die sich eine Gewinde-Inbusschraube 21 erstreckt. Der Gewindekopf 22 mit dem Inbus wird durch die Ringschulter 19 abgestützt.

Die Inbus-Gewindeschraube 21 ragt in eine zentrische Gewindebohrung 23 im axial innen liegenden Ende des innenkonus 15 hinein und wirkt damit zusammen. Beim Drehen der Inbus-Gewindeschraube 21 wird dieser Innenkonus 15 in den Hohlraum 14 hineingezogen. Dabei gleitet die konische Außenmantelfläche 16 des Innenkonus 15 auf der ebenfalls konischen Innenmantelfläche 17 der Spannbuchse 12 auf bzw. entlang, wobei die Welle 3 verspannt wird.

Dem ersten Spannsatz 5 liegt der zweite Spannsatz 6 axial gegenüber, der eine Spannbuchse 24 mit einer zylindrischen Außenmantelfläche 25 und eine Innenraum 26 mit einem konusartigen Querschnitt besitzt. Die Innenmantelfläche 27, welche den konischen Innenraum 26 nach radial außen begrenzt, verjüngt sich konisch zum ersten Spannsatz 5 hin.

In diesen Innenraum 26 ist ein Konus 28 eingesetzt, dessen Außenmantelfläche 29 konisch zum ersten Spannsatz 5 hin zuläuft bzw. sich verjüngt. Mit anderen Worten, der Durchmesser des Innenraums 26 nimmt von dem axial innen liegenden Ende zum ersten Spannsatz hin 5 kontinuierlich ab.

Der Konus 28 besitzt mehrere radial außen angeordnete durchgehenden Bohrungen 31, durch die sich eine axial erstreckende Gewinde-Inbusschraube 30 erstreckt. Diese Gewinde-Inbusschrauben 30 sind mit ihrem Gewindekopf am Konus 28 abgestützt und erstrecken sich in korrespondierende Gewindebohrungen 13 in der Kupplung 11. Beim Anziehen dieser Inbus-Gewindeschraube wird der Konus 28 in den Innenraum 26 hineingezogen. Dabei läuft die konische Außenmantelfläche 29 des Konus 28 auf der komplementär konischen Innenmantelfläche 27 der Spannbuchse 24 auf, wobei ein Verspannen bzw. ein Verpressen nach axial außen erfolgt. Dabei wird die Außenmantelfläche 25 der Spannbuchse 24 gegen die in der Fig. 2 nicht gezeigte Innenmantelfläche der Hohlwelle 2 verpresst, man vergleiche auch Fig. 1.

Der Außendurchmesser der Spannbuchse 24 im Bereich der Außenmantelfläche 25 ist größer als der Außendurchmesser des ersten Spannsatzes 5 bzw. der Spannbuchse 12. Dadurch entsteht ein Ringspalt 32 zwischen dem ersten Spannsatz 5 und der diesen umgebenden Hohlwelle 2, man vergleiche auch Fig. 1.

Das Wirkprinzip der beiden Spannsätze 5 und 6 und deren konstruktiven Ausgestaltung ist im übrigen bekannt.

Zwischen den beiden Spannsätzen 5 und 6 befindet sich die Kupplung 11.

Aus Gründen der besseren Darstellbarkeit und klareren terminologischen Abgrenzung wird im Rahmen der vorliegenden Erfindung die Kombination aus den beiden Spannsätzen 5, 6 und der dazwischen liegenden und diese Spannsätze verbindenden Kupplung als Hohlwellenkupplung bezeichnet. Als Kupplung wird hingegen nur die Verbindungseinrichtung bzw. Verbindungsvorrichtung zwischen den beiden Spannsätzen bezeichnet.

Eine Kupplung besteht nun - wie bereits oben dargelegt - aus zwei Kupplungsnaben für den Antrieb bzw. den Abtrieb von einem diesen beiden Kupplungsnaben verbindenden Kupplungselement.

Die Kupplungsnaben der erfindungsgemäßen Kupplung 11 können separat ausgestaltet sein. In diesem Fall muss die jeweilige Kupplungsnabe mit dem dazugehörigen Spannsatz 5 oder 6 drehfest verbunden werden. Diese Kupplungsnaben können allerdings auch integraler Bestandteil der beiden Spannsätze sein und in den zueinander zeigenden Enden ausgebildet sein, wie dies bei den Kupplung der in den Figuren gezeigten Ausführungsformen der Fall ist. Bei der in der Fig. 2 dargestellten Kupplung 11 handelt es sich um eine Federscheibenkupplung. Das Kupplungselement 10 besitzt einen zylindrischen Körper 33 (siehe Fig. 4), der an seinen beiden axialen Enden einerseits am ersten Spannsatz 5 und anderseits am zweiten Spannsatz 6 in diesen übergeht bzw. einstückig damit ausgebildet ist. Quer zur Längsachse des Körpers 33 sind in axial beabstandeten Querschnittsebenen liegende Schlitze 34 angeordnet. Die Schlitze 34 einer Querschnittsebene sind durch Federscheiben 35 voneinander getrennt die miteinander bzw. mit dem ersten Spannsatz 5 und dem zweiten Spannsatz 6 über Stege 35 verbunden sind. Eine derartige Federscheibenanordnung ist in der bereits eingangs genannten Europäischen Patentanmeldung 0 318 669 A1 beschrieben, deren Inhalt hiermit zum Gegensand der vorliegenden Anmeldung gemacht wird.

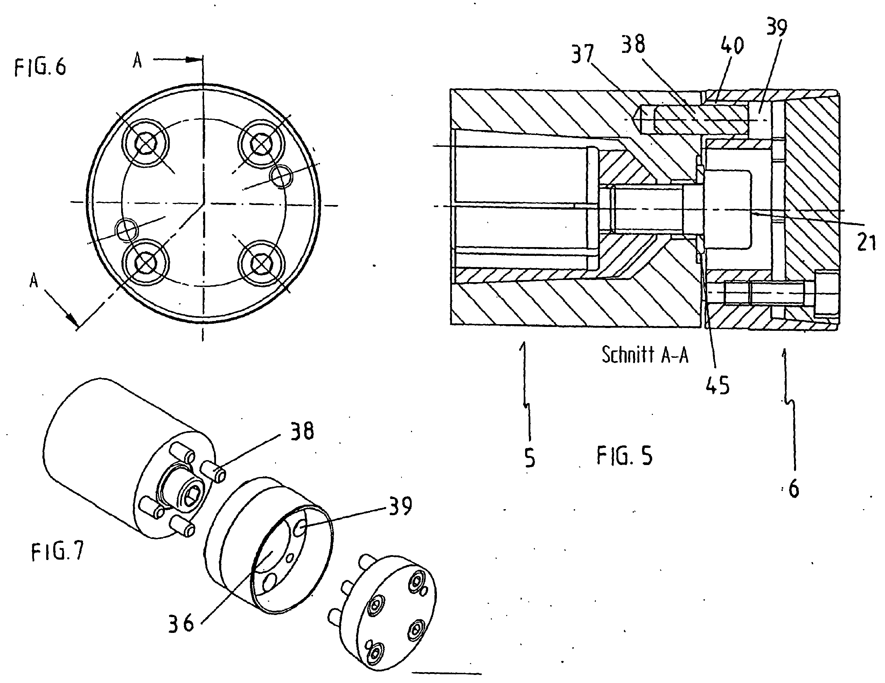

Die in der Fig. 5 bis 7 gezeigte Ausführungsform stellt eine steckbare Kupplung dar. Der erste Spannsatz 5 und der zweite Spannsatz 6 sind dabei ebenso bzw. ähnlich aufgebaut wie die entsprechenden Spannsätze der in der Fig. 2 bis 4 gezeigten Ausführungsform. Gleiche oder ähnliche Elemente bzw. Teile besitzen daher auch die gleichen Bezugszeichen.

Der erste Spannsatz 5 bei der steckbaren Kupplung weist an seinem zum zweiten Spannsatz 6 zeigenden Ende mehrere, sich axial erstreckende, gleichmäßig auf den Umfang verteilte Sacklochbohrungen 37 auf, in die jeweils ein Stift 38 eingesetzt ist, der über das Ende des zweiten Spannsatzes 5 nach axial außen herausragt und in eine korrespondierende Durchgangsbohrung 39 im gegenüber liegenden Ende des zweiten Spannsatzes 6 hineinragt. Bei den Stiften 38 handelt es sich um Zylinderstifte, die in der Durchgangsbohrung 39 in eine Auskleidung 40 aus einem gleitlagerfähigen Kunststoff eingesetzt sind. In die Sacklochbohrungen 37 sind die Zylinderstifte 38 passgenau eingesetzt. Eine derartige konstruktive Ausgestaltung bzw. steckbare Kupplung ist in der DE 198 19 239 A1 beschrieben, die ebenfalls eingangs erwähnt wurde und deren Inhalt hiermit zum Gegenstand der vorliegenden Anmeldung gemacht wird.

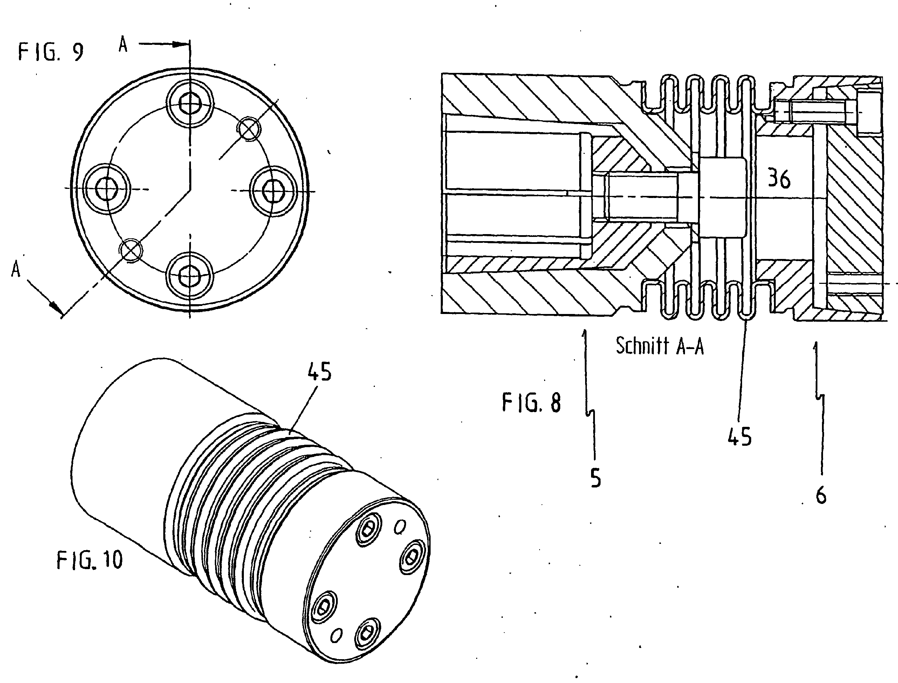

Bei der in den Figuren 8 bis 10 gezeigten Ausführungsform werden die beiden Spannsätze 5 und 6 mittels einer MetallbalgKupplung verbunden. Das Kupplungselement 11 besitzt somit einen Metallbalg 45, der an seinen Enden einerseits am ersten Spannsatz 5 und andererseits am zweiten Spannsatz 6 befestigt bzw. fest damit verbunden ist, beispielsweise durch Verkleben.

Ein derartiger Kupplungstyp ist beispielsweise beschrieben in der EP 1 923 588 A1 dessen Offenbarungsgehalt hiermit zum Gegenstand der vorliebenden Anmeldung gemacht wird.

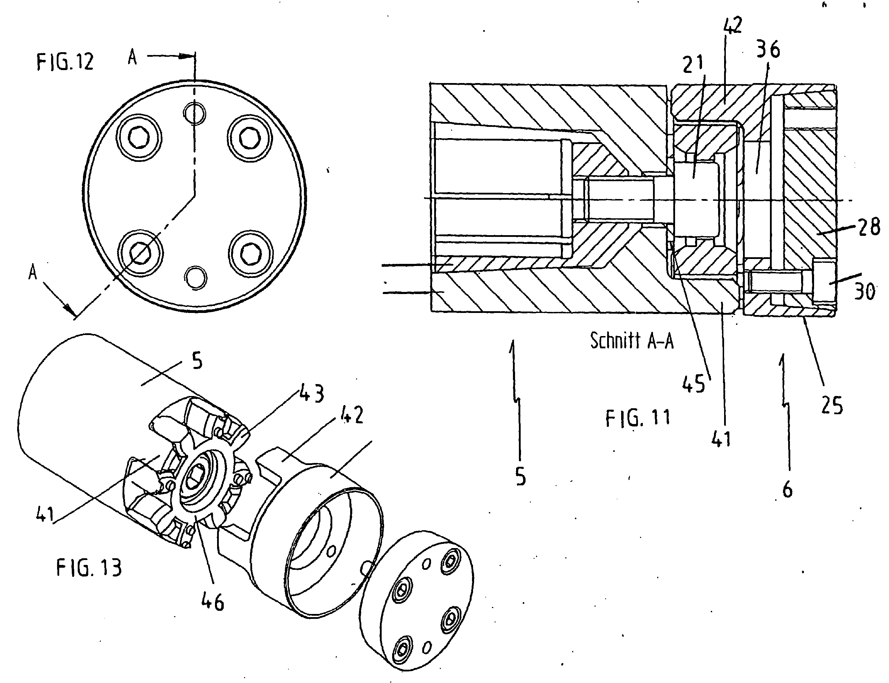

Bei der in den Figuren 11 bis 13 gezeigten Kupplung handelt es sich um eine Elastomerkupplung. Die beiden Spannsätze 5 und 6 entsprechen auch bei dieser Ausführungsform den bereits im Zusammenhang mit den anderen Ausführungsformen beschriebenen. Der Unterschied besteht somit primär in der Kupplung 11 bzw. im Kupplungselement 10.

Der erste Spannsatz 5 als auch der zweite Spannsatz 6 weisen an ihren zueinander zeigenden Enden sich achsparallel erstreckende, an der Peripherie angeordnete Fortsätze 41 bzw. 42 auf. Die Anzahl der Fortsätze 41 und 42 entspricht dabei einander. Der radiale Abstand der Fortsätze 41 ist dabei derart bemessen, dass zwischen zwei auf dem Umfang benachbarte Fortsätze 41 ein gegenüberliegender Fortsatz 42 und ein sich radial erstreckender Zahn 43 eines Elastomerzahnkranzes 44 zu liegen kommen können und seitlich dicht aneinander anliegen, wobei der Zahn aus Elastomermaterial geringfügig zwischen den beiden anliegenden Fortsätzen 41 und 42 zusammengedrückt wird. Die Zähne 43 dieses Elastomerzahnkranzes 44 sind einstückig ausgebildet mit einem Ring 45.

Auch eine derartige Elastomerkupplung, die durch Zusammenstecken zusammen gebaut wird, ist bekannt, so dass sich weitere Ausführungen erübrigen.

Alle die in den Figuren gezeigten Kupplungen besitzen eine Öffnung 36 im Kupplungselement 10, so dass die Inbus-Gewindeschraube 21 vom zweiten Spannsatz 6 her zugänglich ist.

### Bezugszeichenliste

- 1: Hohlwellenkupplung
- 2: Hohlwelle
- 3: Welle
- 4: Kugellager
- 5: Erster Spannsatz
- 6: Zweiter Spannsatz
- 7: Innenmantelfläche
- 8: Außenmantelfläche des zweiten Spannsatzes 6
- 9: Außenmantelfläche des ersten Spannsatzes 5
- 10: Kupplungselement
- 11: Kupplung
- 12: Spannbuchse
- 13: Gewindebohrung
- 14: Hohlraum
- 15: Innenkonus
- 16: Außenmantelfläche des Innenkonus 15
- 17: Innenmantelfläche des Hohlraums 14
- 18: Innenhohlraum
- 19: Ringschulter
- 20: Durchlassöffnung
- 21: Inbus-Gewindeschraube
- 22: Gewindekopf
- 23: zentrische Gewindebohrung
- 24: Spannbuchse des zweiten Spannsatzes 6
- 25: Außenmantelfläche der Spannbuchse 24
- 26: Innenraum
- 27: Innenmantelfläche der Spannbuchse 24
- 28: Konus
- 29: Außenmantelfläche des Konus 28
- 30: Inbus-Gewindeschraube
- 31: Bohrung
- 32: Ringspalt
- 33: zylindrischer Körper
- 34: Schlitz
- 35: Steg
- 36: Öffnung im Kupplungselement
- 37: Sacklochbohrung
- 38: Zylinderstift
- 39: Durchgangsbohrung
- 40: Auskleidung
- 41: Fortsatz des ersten Spannsatzes 5
- 42: Fortsatz des zweiten Spannsatzes 6
- 43: Zahn
- 44: Elastomerzahnkranz
- 45: Ring

## Patentansprüche

1. Hohlwellenkupplung zum Verbinden einer Welle (3) mit einer Hohlwelle (2), wobei
diese Hohlwellenkupplung (1) vollständig in der Hohlwelle (2) angeordnet sein kann und eine Verspannung sowohl nach axial innen als auch nach axial außen bewirken kann,
ein erster Spannsatz (5) die Hohlwellenkupplung (1) nach axial innen gegen die Welle (3) verspannt;
ein vom ersten Spannsatz (5) separater zweiter Spannsatz (6) die Hohlwellenkupplung (1) nach axial außen gegen die Innenmantelfläche (7) der Hohlwelle (2) verspannt und
die beiden Spannsätze (5, 6) axial voneinander beabstandet sind sowie spielfrei und drehstabil miteinander verbunden sind, **dadurch gekennzeichnet, dass**
die beiden Spannsätze (5, 6) über eine dazwischen angeordnete Kupplung (11) verbunden sind und die Kupplung (11)
ein steckbare Kupplung,
eine Balgkupplung,
eine Elastomerkupplung oder
eine Federscheibenkupplung ist.

2. Hohlwellenkupplung nach Anspruch 1,
**dadurch gekennzeichnet, dass**
der Außendurchmesser des zweiten Spannsatzes (6) größer ist als der Außendurchmesser des ersten Spannsatzes (5),

3. Hohlwellenkupplung nach einem der vorhergehenden Ansprüche,
**dadurch gekennzeichnet, dass**
die Kupplung (11) zwei durch die Spannsätze (5, 6) gebildete Naben und ein diese Naben verbindendes Kupplungselement (10) aufweist, ein Betätigungsmittel (21) für den ersten Spannsatz (5) durch eine Öffnung, (36) im Kupplungselement (10) der Kupplung (11) von der derjenigen Seite der Hohlwellenkupplung (1) her zugänglich ist, welche der Welle (3) axial gegenüberliegt.

4. Hohlwellenkupplung nach Anspruch 3,
**dadurch gekennzeichnet, dass**
das Betätigungsmittel (21) ein zentrische Gewindeschraube ist.

5. Hohlwellenkupplung nach Anspruch 3 oder 4,
**dadurch gekennzeichnet, dass**
die Gewindeschraube (21), in eine Gewindebohrung (23) eines konusförmigen Spannkegels (15) ergreift, der mit einer konisch ausgebildeten Spannbuchse (12) zur Bildung des ersten Spannsatzes (5) zusammenwirkt.

6. Hohlwellenkupplung nach Anspruch 4 oder 5,
**dadurch gekennzeichnet, dass**
die Gewindeschraube (21) eine Inbusschraube ist.

## Claims

1. A hollow shaft coupling for connecting a shaft (3) to a hollow shaft (2),
wherein
said hollow shaft coupling (1) can be arranged completely in the hollow shaft (2) and can effect clamping both axially inwardly as well as axially outwardly,
a first clamping unit (5) clamps the hollow shaft coupling (1) axially inwardly against the shaft (3),
a second clamping unit (6) which is separate from the first clamping unit (5) clamps the hollow shaft coupling (1) axially outwardly against the inner circumferential surface (7) of the hollow shaft (2), and
the two clamping units (5, 6) are spaced apart from one another axially and connected to one another to be play-free and rotationally stable, **characterized in that**
the two clamping units (5, 6) are connected to one another via a coupling (11) which is arranged between them, and the coupling is a plug-in coupling,
a bellows coupling,
an elastomer coupling or
a spring disk coupling.

2. The hollow shaft coupling according to claim 1,
**characterized in that**
the outer diameter of the second clamping unit (6) is larger than the outer diameter of the first clamping unit (5).

3. The hollow shaft coupling according to any one of the preceding claims,
**characterized in that**
the coupling (11) comprises two hubs formed by the clamping units (5, 6), and a coupling element (10) connecting said hubs,
an actuating means (21) for the first clamping unit (5) is accessible from the side of the hollow shaft coupling (1) which is axially opposite to the shaft (3) through an opening (36) in the coupling element (10) of the coupling (11).

4. The hollow shaft coupling according to claim 3,
**characterized in that**
the actuating means (21) is a centric threaded screw.

5. The hollow shaft coupling according to claim 3 or 4,
**characterized in that**
the threaded screw (21) engages in a threaded bore (23) of a cone-shaped clamping cone (15) which cooperates with a clamping bush (12) of conical configuration for forming the first clamping unit (5).

6. The hollow shaft coupling according to claim 4 or 5,
**characterized in that**
the threaded screw (21) is a hexagon screw.

## Revendications

1. Accouplement d'arbre creux destiné à relier un arbre (3) à un arbre creux (2), sachant que
cet accouplement d'arbre creux (1) peut être disposé entièrement dans l'arbre creux (2) et peut engendrer un serrage aussi bien vers l'intérieur axialement que vers l'extérieur axialement,
un premier ensemble de serrage (5) serre l'accouplement d'arbre creux (1) contre l'arbre (3) vers l'intérieur axialement,
un deuxième élément de serrage (6) distinct du premier élément de serrage (5) serre l'accouplement d'arbre creux (1) contre la surface d'enveloppe intérieure (7) de l'arbre creux (2) vers l'extérieur axialement et
les deux ensembles de serrage (5, 6) sont axialement écartés l'un de l'autre et sont reliés entre eux sans jeu et de manière solidaire en rotation,
**caractérisé en ce que**
les deux ensembles de serrage (5, 6) sont reliés par un accouplement (11) disposé entre eux et **en ce que** l'accouplement (11) est un accouplement enfichable,
un accouplement à soufflet,
un accouplement en élastomère ou
un accouplement à disques élastiques.

2. Accouplement d'arbre creux selon la revendication 1,
**caractérisé en ce que**
le diamètre extérieur du deuxième ensemble de serrage (6) est supérieur au diamètre extérieur du premier ensemble de serrage (5).

3. Accouplement d'arbre creux selon l'une des revendications précédentes,
**caractérisé en ce que**
l'accouplement (11) présente deux moyeux formés par les éléments de serrage (5, 6) et un élément d'accouplement (10) reliant ces moyeux, un moyen d'actionnement (21) pour le premier ensemble de serrage (5) est accessible par un orifice (36) dans l'élément d'accouplement (10) de l'accouplement (11) depuis le côté de l'accouplement d'arbre creux (1) qui est axialement opposé à l'arbre (3).

4. Accouplement d'arbre creux selon la revendication 3,
**caractérisé en ce que**
l'élément d'actionnement (21) est une vis filetée centrée.

5. Accouplement d'arbre creux selon la revendication 3 ou 4,
**caractérisé en ce que**
la vis filetée (21) prend dans un alésage fileté (23) d'un cône de serrage de forme conique (15) qui interagit avec une douille de serrage de forme conique (12) pour constituer le premier élément de serrage (5).

6. Accouplement d'arbre creux selon la revendication 4 ou 5,
**caractérisé en ce que**
la vis filetée (21) est une vis à six pans creux.
